Europäisches Patentamt

European Patent Office

Office européen des brevets

(11) Numéro de publication: **0 448 889 A1**

## (12) DEMANDE DE BREVET EUROPEEN

(21) Numéro de dépôt: 90400867.9

(22) Date de dépôt: 30.03.90

(51) Int. Cl.5: **F16B 2/16**

(30) Priorité: 30.03.90 FR 8904128

(43) Date de publication de la demande:
02.10.91 Bulletin 91/40

(84) Etats contractants désignés:
BE DE ES GB IT NL

(71) Demandeur: Volsy, Robert Michel
Montaud
F-38210 Tullins(FR)

(72) Inventeur: **Mical, Henry**
**6, rue des Fontanes**
**F-38150 Falaise-sur-Sanne(FR)**

(74) Mandataire: **Casalonga, Axel et al**
**BUREAU D.A. CASALONGA - JOSSE**
**Morassistrasse 8**
**W-8000 München 5(DE)**

(54) **Dispositif de maintien d'un support ou autre sur un élément allongé.**

(57) Dispositif de maintien d'un support tel qu'une étagère sur un élément allongé tel qu'un montant comprenant un manchon (2) disposé autour de l'élément allongé (3) et présentant à l'une de ses parties d'extrémité (8), sur au moins une partie de scn pourtour, une rampe (9) qui délimite avec la paroi de l'élément allongé un espace (10) qui présente une largeur croissante vers l'extrémité du manchon, ainsi qu'une pièce de coincement (11) en un matériau élastique disposée dans ledit espace et en contact avec la rampe et la paroi extérieure lisse de l'élément allongé, de manière à produire un effet de coin sous l'effet d'une force appliquée sur le manchon (2) en direction de son extrémité précitée (8) permettant l'immobilisation dans cette direction du manchon (2) sur l'élément allongé (3) en un endroit quelconque le long de ce dernier.

La présente invention concerne un dispositif de maintien d'un support ou autre sur un élément allongé.

Lorsqu'on souhaite fixer par exemple une étagère sur un poteau par l'intermédiaire d'un manchon entourant ce poteau, sur lequel prend appui une étagère, on utilise généralement des vis qui soit sont vissées radialement dans le manchon et appuient sur la paroi extérieure du poteau soit sont vissées dans des trous ménagés dans le poteau et traversent des orifices ménagés dans le manchon. Ces dispositions ne permettent pas de modifier simplement et rapidement la position des étagères par rapport au poteau et de plus, en cas de changement de position, le poteau reste endommagé.

La présente invention propose au contraire un dispositif de maintien d'un support sur un élément allongé qui permet simplement et rapidement de changer la position du support par rapport à cet élément allongé, sans qu'il y ait d'intervention sur ce dernier et sans l'endommager.

Le dispositif de maintien de l'invention peut par exemple être utilisé pour le maintien d'étagères ou autres supports sur un élément allongé constitué par un poteau mais peut être utilisé dans bien d'autres domaines.

Le dispositif de maintien d'un support ou autre sur un élément allongé selon l'invention comprend un manchon disposé autour de l'élément allongé et présentant à l'une de ses parties d'extrémité, sur au moins une partie de son pourtour, une rampe qui délimite avec la paroi de l'élément allongé un espace qui présente une largeur croissante vers l'extrémité du manchon, ainsi qu'une pièce de coincement en un matérieu élastique disposée dans ledit espace et en contact avec la rampe et la paroi extérieure lisse de l'élément allongé, de manière à produire un effet de coin sous l'effet d'une force appliquée sur le manchon en direction de son extrémité précitée permettant l'immobilisation dans cette direction du manchon sur l'élément allongé en un endroit quelconque le long de ce dernier.

Dans une variante préférée de l'invention, ladite pièce de coincement en un matériau élastique est formée par une bague entourant l'élément allongé et montée tendue sur ce dernier.

Selon l'invention, ladite pièce de coincement est avantageusement de section circulaire.

Selon l'invention, ladite pièce de coincement est de préférence en caoutchouc synthétique.

Selon l'invention, le manchon peut avantageusement présenter une rampe qui délimite avec la paroi de l'élément allongé un espace annulaire.

Selon l'invention, l'angle d'ouverture dudit espace, produisant l'effet de coin, est de préférence compris entre 10° et 45°.

Dans une variante préférée, ledit élément allongé est constitué par un tube de section circulaire, ce tube étant par exemple en une matière synthétique translucide.

Dans une construction particulière selon l'invention, ledit élément allongé est disposé verticalement et ledit manchon constitue un organe support, son espace recevant la pièce de coincement étant orienté vers le bas.

Selon l'invention, ledit manchon peut avantageusement présenter, à son extrémité opposée à celle qui reçoit la pièce de coincement, une surface annulaire constituant une surface d'appui axial.

Selon l'invention, pour par exemple précontraindre la pièce de coincement, le manchon peut être monté coulissant sur l'élément allongé, sous l'effet d'un effort.

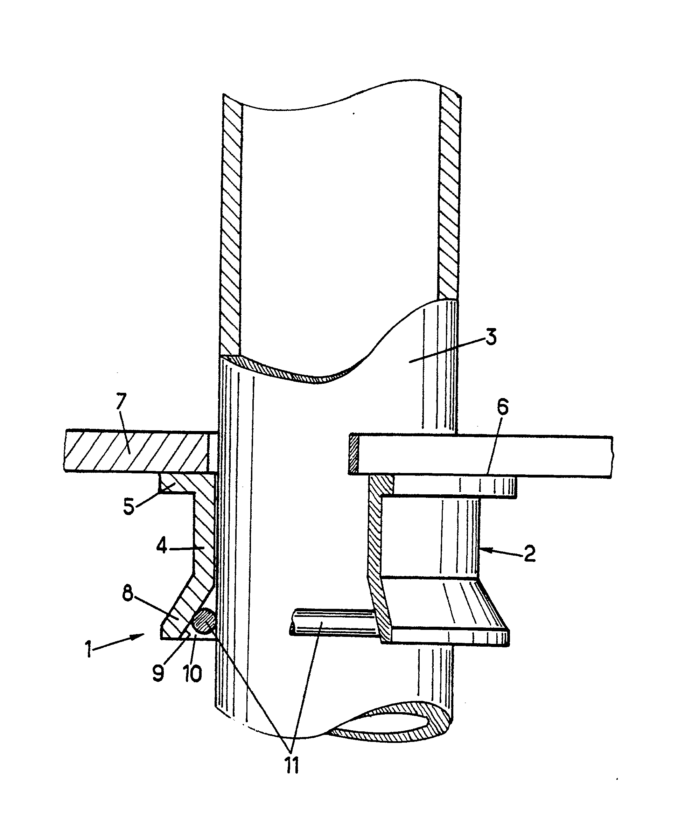

La présente invention sera mieux comprise à l'étude d'un dispositif de maintien décrit à titre d'exemple non limitatif et illustré par la figure unique annexée représentant ce dispositif de maintien dans une vue en élévation partiellement en coupe.

Le dispositif de maintien représenté sur la figure et repéré d'une manière générale par la référence 1 comprend un manchon annulaire 2 qui est disposé autour d'un élément allongé 3 formé dans l'exemple par un tube vertical de section cylindrique par exemple en une matière synthétique, ce tube 3 constituant un montant ou un poteau.

Le manchon 2 comprend une partie centrale 4 cylindrique glissant juste sur le tube 3. L'extrémité supérieure de cette partie centrale 4 présente un rebord périphérique annulaire 5 qui présente une surface d'extrémité supérieure 6 qui s'étend radialement au tube 3 et qui constitue une surface d'appui pour une étagère horizontale 7.

L'extrémité inférieure de la partie centrale 4 du manchon 2 présente un prolongement annulaire 8 qui s'étend vers le bas et vers l'extérieur de manière à déterminer une rampe annulaire tronconique 9 située en vis-à-vis de la paroi extérieure du tube 3. Cette rampe 9 du manchon 2 délimite avec la paroi extérieure du tube 3 un espace annulaire 10 de section en forme de V et ouvert vers le bas.

Le dispositif de maintien 1 comprend également une pièce de coincement qui est constituée dans l'exemple par une bague annulaire 11 qui entoure le tube 2, qui est disposée dans l'espace annulaire 10 et qui est en appui contre la paroi extérieure du tube 3 et contre la rampe 9 du manchon 2. Cette bague 11 est en un matériau élastique, de préférence en un caoutchouc synthétique, et est de section circulaire.

Le dispositif de maintien 1 peut être utilisé et fonctionne de la manière suivante.

Le tube 3 étant fixé au sol ou porté par un socle, on engage la bague 11 sur la paroi extérieure du tube 3 par l'extrémité supérieure de ce dernier, la bague 11 présentant avant montage un diamètre intérieur inférieur au diamètre extérieur du tube 3 de telle sorte que lorsqu'elle est disposée sur ce tube 3, sa tension permet de la maintenir.

On glisse la bague 11 le long du tube 3 de manière à l'amener à un endroit choisi le long de ce tube.

On engage le manchon 2 sur le tube 3 jusqu'à amener sa rampe 9 en appui sur la bague 11 et on dispose l'étagère 7 en appui sur la face 6 du manchon 2. Sous l'effet d'une force ou d'une charge appliquée au manchon 2 en direction de sa partie d'extrémité 8, en particulier sous l'effet d'une charge disposée sur l'étagère 7, il se produit un effet de coincement de la bague 11 dans l'espace lisse entre la paroi extérieure lisse du tube 3 et la rampe 9 du manchon 2, immobilisant le manchon 2 sur le tube 3 dans cette direction. Dans une variante, le manchon 2 est monté coulissant sur le tube 3 sous l'effet d'un effort axial. Ainsi, lorsqu'on monte le manchon 2, il est possible de précontraindre la bague élastique 11 à la position choisie.

Si l'on souhaite changer la position d'immobilisation du manchon 2 par rapport au tube 3, on relève le manchon 2, on fait glisser la bague 11 de manière à l'amener à un autre endroit choisi le long du tube 3 et on ramène le manchon 2 en appui contre la bague 11 par sa rampe 9.

Dans un exemple de réalisation possible, le tube 3 présente un diamètre extérieur de 100 mm, la partie centrale 4 du manchon 2 présente un diamètre intérieur tel que ce manchon glisse avec frottement sur le tube 3, la rampe 9 fait un angle de 30° avec la paroi extérieure du tube 3 et la bague 11 présente un diamètre de 3 mm.

Avantageusement, le tube 3 peut être en une matière synthétique translucide, ce tube pouvant recevoir à l'intérieur des moyens d'éclairage.

La présente invention ne se limite pas à l'exemple ci-dessus décrit. En effet, le manchon pourrait présenter une forme quelconque, sa rampe 9 pourrait ne s'étendre que sur une partie du pourtour du tube 3 et la bague 11 pourrait être sectionnée en plusieurs parties périphériques. La rampe 9 du manchon 2 pourrait être de forme quelconque et par exemple pourrait en section être en arc de cercle. Le manchon 2 formant dans l'exemple une butée pour une étagère 7 pourrait servir de support ou de butée réglable pour tout autre élément et en particulier pour porter des panneaux d'affichage. Le tube 3 pourrait être de section quelconque, par exemple polygonale.

**Revendications**

1. Dispositif de maintien d'un support ou autre sur un élément allongé dont la paroi extérieure est lisse, caractérisé par le fait qu'il comprend une bague de coincement (11) en un matériau élastique entourant l'élément allongé (3) et montée tendue sur ce dernier, de manière à pouvoir être glissée et à s'immobiliser en un endroit quelconque choisi le long de l'élément allongé (3), ainsi qu'un manchon (2) disposé autour de l'élément allongé (3) et présentant à l'une de ses parties d'extrémité (8), sur au moins une partie de son pourtour, une rampe (9) qui délimite avec la paroi de l'élément allongé un espace ouvert (10) et qui présente une largeur croissante vers l'extrémité du manchon de telle sorte que, ledit manchon (2) étant glissé le long de l'élément allongé (3) jusqu'à ce que ladite bague de coincement (11) soit engagée dans ledit espace (10) et en contact avec ladite rampe (9), il se produit un effet de coin par déformation de ladite bague de coincement (11) sous l'effet d'une force appliquée sur le manchon (2) en direction de son extrémité précitée (8), permettant ainsi l'immobilisation dans cette direction du manchon (2) sur l'élément allongé (3) audit endroit quelconque choisi précité.

2. Dispositif de maintien selon la revendication 1, caractérisé par le fait que ladite bague de coincement (11) est de section circulaire.

3. Dispositif de maintien selon l'une des revendications précédentes, caractérisé par le fait que ladite bague de coincement (11) est en caoutchouc synthétique.

4. Dispositif de maintien selon l'une quelconque des revendications précédentes, caractérisé par le fait que le manchon (2) présente une rampe (9) qui délimite avec la paroi de l'élément allongé un espace ouvert annulaire (10).

5. Dispositif de maintien selon l'une quelconque des revendications précédentes, caractérisé par le fait que l'angle d'ouverture dudit espace (10), produisant l'effet de coin, est compris entre 10° et 45°.

6. Dispositif de maintien selon l'une quelconque des revendications précédentes, caractérisé par le fait que ledit élément allongé est constitué par un tube (3) de section circulaire.

7. Dispositif de maintien selon la revendication 6, caractérisé par le fait que ledit tube (3) est en une matière synthétique translucide.

8. Dispositif de maintien selon l'une quelconque des revendications précédentes, caractérisé par le fait que ledit élément allongé (3) est disposé verticalement et que ledit manchon (2) constitue un organe support, son espace (10) recevant la bague de coincement (11) étant orienté vers le bas.

9. Dispositif de maintien selon l'une quelconque des revendications précédentes, caractérisé par le fait que ledit manchon (2) présente, à son extrémité opposée à celle qui reçoit la pièce de coincement (11), une surface annulaire (6) constituant une surface d'appui axial.

10. Dispositif de maintien selon l'une quelconque des revendications précédentes, caractérisé par le fait que le manchon (2) est monté coulissant sur l'élément allongé (3) sous l'effet d'un effort.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | GB-A-2207340 (JOSEPHWILLIAMLOWRY) <br> * page 3, ligne 18 - page 6, ligne 11; revendications ; figures * <br> --- | 1-6, 8-10 | F16B2/16 |
| X | GB-A-2078508 (CARTERS (J&A) LTD.) <br> * abrégé * <br> * page 1, ligne 85 - page 2, ligne 8; figures 1, 2 * | 1-6, 8-10 | |
| Y | --- | 7 | |
| Y | FR-A-2540960 (SOTUBEMA S.A.) <br> * page 6, ligne 1 - page 6, ligne 37; figure 13 * <br> --- | 7 | |
| A | GB-A-2094392 (IVAN SEMENENKO) <br> * le document en entier * <br> --- | 2, 9 | |
| A | DE-U-8708941 (BOGE GMBH) <br> ----- | | |

**DOMAINES TECHNIQUES RECHERCHES (Int. Cl.5)**

F16B

Le présent rapport a été établi pour toutes les revendications

| Lieu de la recherche | Date d'achèvement de la recherche | Examinateur |
|---|---|---|
| LA HAYE | 29 JUIN 1990 | ARESO Y SALINAS |